(19) Europäisches Patentamt
European Patent Office
Office européen des brevets

(11) **EP 1 076 029 B1**

(12) **EUROPÄISCHE PATENTSCHRIFT**

(45) Veröffentlichungstag und Bekanntmachung des Hinweises auf die Patenterteilung:
**05.03.2008 Patentblatt 2008/10**

(51) Int Cl.:
***B66B 1/30*** *(2006.01)*

(21) Anmeldenummer: **00115387.3**

(22) Anmeldetag: **17.07.2000**

(54) **Verfahren zur Verwaltung der Energieresource eines autonomen Fahrzeuges eines Transportsystems.**

Method for managing the power source of a autonomous vehicle in a transport system

Méthode de gestion de la source d'énergie d'un véhicule autonome dans un système de transport

(84) Benannte Vertragsstaaten:
**AT CH DE FR GB LI**

(30) Priorität: **22.07.1999 EP 99810659**

(43) Veröffentlichungstag der Anmeldung:
**14.02.2001 Patentblatt 2001/07**

(73) Patentinhaber: **INVENTIO AG**
**6052 Hergiswil (CH)**

(72) Erfinder: **Schuster, Kilian, El.-Ing. ETH**
**6275 Ballwil (CH)**

(56) Entgegenhaltungen:
**GB-A- 2 121 557       US-A- 4 402 387**

- **PATENT ABSTRACTS OF JAPAN vol. 1999, no. 05, 31. Mai 1999 (1999-05-31) & JP 11 049446 A (HITACHI BUILDING SYST CO LTD), 23. Februar 1999 (1999-02-23)**
- **PATENT ABSTRACTS OF JAPAN vol. 002, no. 128 (M-037), 26. Oktober 1978 (1978-10-26) & JP 53 096146 A (ISHIKAWAJIMA HARIMA HEAVY IND CO LTD), 23. August 1978 (1978-08-23)**

**Beschreibung**

Die Erfindung betrifft ein Verfahren zur Verwaltung der Energieresource eines autonomen Fahrzeuges eines mindestens ein Fahrzeug aufweisenden Transportsystems, wobei das Fahrzeug für den Transport von Personen und/ oder Gütern in vertikaler und/oder horizontaler Richtung vorgesehen ist und für die Fortbewegung des Fahrzeuges ein mittels der Energieresource versorgter Antrieb vorgesehen ist, wobei die Energieresource an mindestens einer Ladestation mit Energie versorgt wird.

Aus der Patentschrift EP 0 048 847 ist eine mittels Linearmotor angetriebene Aufzugskabine bekannt geworden, wobei auf dem Gegengewicht eine zur Speisung des Linearmotors vorgesehene Batterie angeordnet ist. Die Batterie wird vom Netz her immer dann aufgeladen, wenn das Gegengewicht in der tiefsten Schachtlage ist.

Ein Nachteil der bekannten Einrichtung liegt darin, dass die Aufzugskabine nicht in jedem Fall einsatzbereit ist, weil die Aufladung der Batterie immer nur dann erfolgt, wenn die Aufzugskabine auf dem obersten Stockwerk steht. Insbesondere bei nacheinanderfolgenden Fahrten, die nicht ins oberste Stockwerk führen, kann die Batterie vorzeitig entladen sein.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und die Energieresource eines autonomen Fahrzeuges eines Transportsystems zu verwalten.

Die durch die Erfindung erreichten Vorteile sind im wesentlichen darin zu sehen, dass mit der Verwaltung der Energieresource das Fahrzeug andauernd und ohne ladebedingten Unterbruch eingesetzt werden kann, was die Leistungsfähigkeit des gesamten Transportsystems wesentlich verbessert. Weiter vorteilhaft ist, dass das Fahrzeug selbständig eine Ladestation anfahren kann. Das Fahrzeug ist dadurch unabhängiger und hat eine grössere Bewegungsfreiheit. Die Ladung kann in die durch Fahraufträge vorgegebene Wegstrecke einbezogen werden.

Im folgenden wird die Erfindung anhand von ein Ausführungsbeispiel darstellenden Zeichnungen näher erläutert.

Es zeigen:

Fig. 1    ein Ablaufplan zur Verwaltung der Energieresource eines autonomen Fahrzeuges und zum autonomen Anfahren einer Ladestation,

Fig. 2    ein Ausführungsbeispiel zur Entpannung und Verschiebung eines Fahrzeuges und

Fig. 3    den Verlauf einer Energiebilanz.

Die vorliegende Erfindung bezieht sich auf die Energieversorgung eines autonomen Fahrzeuges eines Transportsystems, welches beispielsweise ein Aufzugssystem mit mindestens einem Aufzugsschacht sein kann, in dem mindestens ein Fahrzeug bzw. mindestens eine Aufzugskabine mit in Sachen Steuerung und Antrieb hoher Autonomie verkehrt, wobei die Fortbewegungsrichtung vertikal und/oder horizontal sein kann. Das Fahrzeug wird mittels des Antriebes fortbewegt. Der Antrieb wird mittels einer Energieresource in der Form eines Energiespeichers beispielsweise einer Batterie mit elektrischer Energie versorgt. Zum Laden des Energiespeichers des Fahrzeuges ist beispielsweise an mindestens einer Haltestelle eine Speiseeinheit vorgesehen, mittels der elektrische Energie von einer stationären Energieversorgung, beispielsweise vom öffentlichen Netz oder von einem Solargenerator auf den Energiespeicher übertragen wird. Eine Kopplung stellt die Verbindung zwischen der stationären Energieversorgung und dem Fahrzeug her.

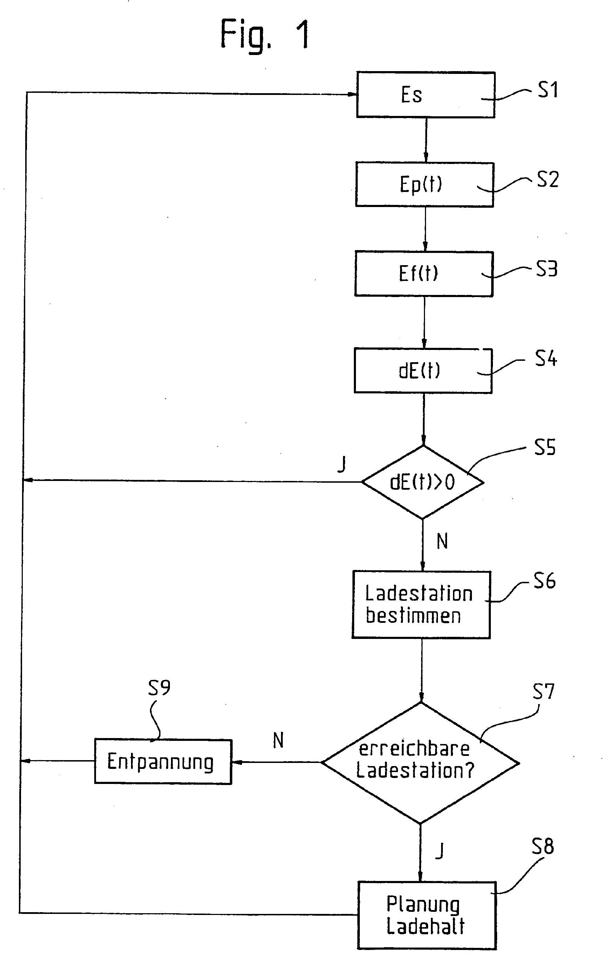

Fig. 1 zeigt einen Ablaufplan zur Verwaltung und Nachladung der Energieresource eines autonomen Fahrzeuges. In einem ersten Schritt S1 wird die noch im Speichermedium vorhandene Energie $E_s$ bestimmt. Bei einem aus Kondensatoren bestehenden Speichermedium genügt die Messung der Spannung, weil die Ladung und somit die Energie aus dem Produkt aus Kapazität und Spannung bestimmbar ist. Bei einer Batterie als Speichermedium kann beispielsweise mittels kontinuierlicher Messung der Spannung und des Stromes bei Belastung/Ladung die gespeicherte Energie bestimmt werden. In einem zweiten Schritt S2 wird die für die anstehenden Fahraufträge notwendige Energie $E_p(t)$ als Funktion der Zeit t ermittelt, wobei Eigengewicht des Fahrzeuges, Fahrdistanz, Fahrtrichtung, Fahrprofil, Last, etc. eines jeden Fahrauftrages bei der Ermittlung der Energie $E_p(t)$ berücksichtigt werden. Die Energie für einen bestimmten Fahrauftrag kann auch im voraus mittels einer Lernfahrt bestimmt und gespeichert werden und bei der Bestimmung der gesamten Energie $E_p(t)$ für die Fahraufträge verwendet werden. In einem dritten Schritt S3 wird die Energiezufuhr $E_f(t)$ aller geplanten Halte eines bestimmten Zeitraumes zur Ladung des Energiespeichers des Fahrzeuges ermittelt. Im nächsten Schritt S4 wird die Energiebilanz $dE(t)$ nach folgender Formel bestimmt, wobei $dE(t)$ für alle Zeiten t positiv sein muss:

$$dE(t) = Es - Ep(t) + Ef(t) \qquad [1]$$

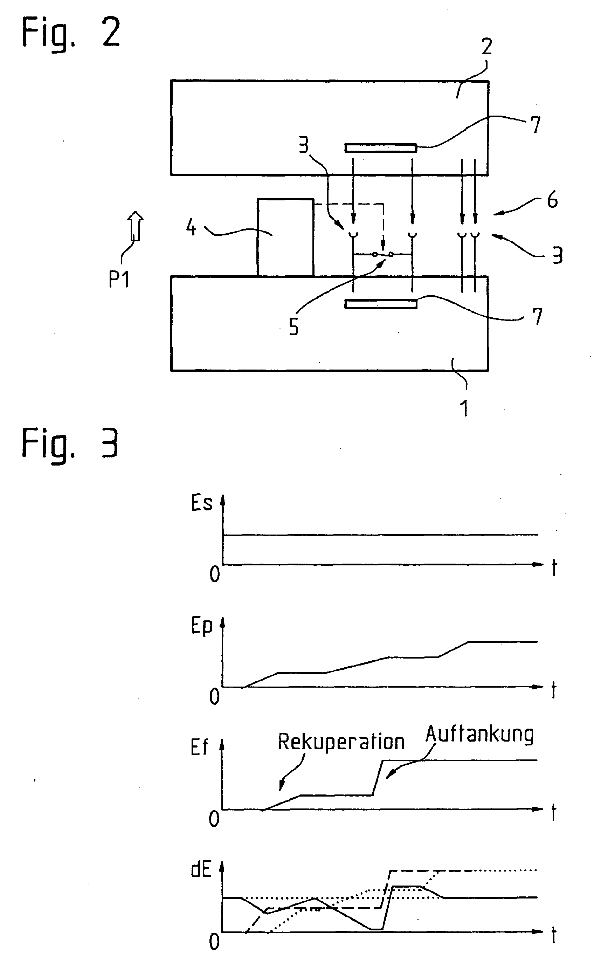

Fig. 3 zeigt beispielhaft den Verlauf von Es, Ep(t), Ef(t) und dE(t). Im Schritt S5 wird geprüft, ob die Energiebilanz dE(t) grösser als Null ist. Falls der Energiespeicher des Fahrzeuges bereits über genügend Energiereserven verfügt und/oder im Verlaufe der Abarbeitung der geplanten Aktivitäten genügend Energie zugeführt werden kann, wird der Schritt S5 mit einem mit J symbolisierten Ergebnis verlassen und der Ablauf erneut mit dem Schritt S1 begonnen. Falls die im Schritt 55 durchgeführte Prüfung mit einem als N symbolisierten negativen Ergebnis endet, wird der Ablauf mit dem Schritt S6 weitergeführt, in dem die Ladestationen beispielsweise anhand eines Planes der Ladestationen bestimmt werden, welche eine positive Energiebilanz gewährleisten. Stehen mehrere mögliche Ladestationen zur Verfügung, so kann die Wahl anhand eines Optimierungskriteriums beispielsweise anhand des Zeitbedarfs für die Ladung erfolgen. Falls wie im Schritt S7 gezeigt, mindestens eine Ladestation zur Verfügung steht, wird der Ablauf im Schritt S8 weitergeführt, in dem die Anfahrt der Ladestation und die Ladung des Energiespeichers in den Fahrplan einbezogen wird. Danach wird der Ablauf erneut mit dem Schritt S1 begonnen. Falls keine Ladestation zur Verfügung steht, so wird die Fahrt unterbrochen und mit dem Schritt S9 eine Entpannung ausgelöst. Nach der Entpannung wird der Ablauf mit dem Schritt S1 weitergeführt.

Im folgenden sind Einzelheiten der Schritte S1 bis S9 erläutert.

S1: Bestimmung der momentanen Energiereserve.

Abhängig vom Speichermedium erfolgt die Bestimmung der momentan zur Verfügung stehenden Energiemenge. Dies kann durch eine direkte Messung oder durch eine fortlaufende Nachführung der Energiebilanz erfolgen. Eine direkte Messung ist beispielsweise bei Kondensatoren durch Messung der Ladespannung, oder bei Verbrennungsmotoren durch Gewichts-/oder Volumenmessung des Brennstoffvorrates oder bei thermischen Energiespeichern durch Messung der Temperatur oder bei Bleiakkumulatoren durch Messung der Säuredichte möglich. Die Nachführung der Energiebilanz basiert auf der fortlaufenden Erfassung des zum Speicher zu- bzw. abfliessenden Energiestroms (Leistung) und der Summation desselben. Dabei kann bei bestimmten Ereignissen, z.B. Volltankung, eine Kalibration der Bilanz durchgeführt werden.

S2: Ermittlung der notwendigen Energie.

Das Fahrzeug verfügt über einen Fahrplan, welcher die Abarbeitung der anstehenden Transportaufträge gewährleistet. Der Fahrplan weist die (erwartete) Position des Fahrzeuges als Funktion der Zeit aus und kann durch verschiedene Methoden erzeugt werden. Das Fahrzeug ermittelt den zur Abarbeitung des Fahrplanes notwendigen Eneriegebedarf Ep(t) unter Berücksichtigung der zu transportierenden Personen und/oder Güter. Dies kann etwa dadurch erfolgen, dass der Fahrplan durch topologische Informationen ergänzt wird und dadurch die zum Transport im Gravitationsfeld notwendige physikalische Arbeit bestimmt werden kann, welche dann um die zu erwartenden Verluste ergänzt wird. Eine andere Methode besteht in der Konsultation einer Tabelle, welche für alle möglichen Fahrwege den Energiebedarf als Funktion des Transportgutes ausweist. Die Tabelle kann im Betrieb nachgeführt werden.

S3: Ermittlung der Energiezufuhr.

Es wird der zeitliche Verlauf der Energiezufuhr Ef(t) ermittelt. Dazu kann beispielsweise im Fahrplan eine Auszeichnung derjenigen Haltestellen erfolgen, an welchen eine Energiezufuhr geplant ist. Die an dieser Haltestelle zugeführte Energiemenge wird bestimmt, etwa aufgrund eines entsprechenden Eintrags im Fahrplan und zeitlich eingeordnet. Als Energiezufuhr ist auch eine allfällige Rekuperation einzurechnen.

S4: Energiebilanz.

Die zu jedem zukünftigen Zeitpunkt t verfügbare Energiereserve dE(t) wird berechnet. Dazu kann die Gleichung dE(t) = Es - Ep(t) + Ef(t) verwendet werden, welche die Energiebilanz der Energieresource repräsentiert.

S5: Kontrolle der Energiebilanz.

Ist dE(t) bis zum Zeitpunkt der Beendung aller Fahraufträge immer positiv, bzw. grösser als eine wohlbestimmte Mindestreserve, so sind keine neuen Auftankhalte notwendig und der Überwachungsprozess kann, allenfalls unter Einhaltung einer bestimmten Wartezeit, mit dem Schritt S1 fortgesetzt werden. Der zum Zeitpunkt der Beendung aller Fahraufträge verfügbaren Energiereserve kann eine zusätzliche Restriktion, etwa abhängig von der Endposition oder den zu erwartenden weiteren Fahraufträgen, auferlegt werden.

S6: Bestimmung möglicher Ladestationen.

Es wird mindestens ein Auftankhalt so bestimmt, dass das Kriterium in S5 positiv ausfällt, also keine weiteren Auftankhalte notwendig sind. Dazu können beispielsweise anhand einer topologischen Karte, in welcher die zur Verfügung stehenden Auftankstellen vermerkt sind, diejenigen bestimmt werden, welche eine durchwegs positive Energiebilanz gemäss S5 zur Folge haben. Dies kann dadurch erfolgen, dass jede mögliche Ladestation provisorisch eingeplant wird und die Berechnungen gemäss S3, S4 und S5 durchgeführt werden. Fällt dabei der Test in S5 positiv aus, so wird die entsprechende Station in die Liste der möglichen Kandidaten aufgenommen. Kombinationen von mehreren Ladestationen sind auch möglich.

S7: Überprüfung der Erreichbarkeit der Ladestationen.

Existiert aus S6 keine gültige Ladestation bzw. Kombinationen von Ladestationen, so wird eine Entpannung gemäss S9 angefordert.

S8: Planung Ladehalt.

Stehen mehrere mögliche Ladestionen bzw. Kombinationen von Ladestationen zur Verfügung, so wird eine einzelne daraus ausgesucht und in den Fahrplan eingeplant. Die Auswahl kann etwa anhand eines bestimmten Optimierungskriterium, beispielsweise die zur Betankung notwendige Zeitdauer, erfolgen. Der weitere Überwachungsprozess wird, allenfalls unter Einhaltung einer bestimmten Wartezeit, mit dem Schritt S1 fortgesetzt.

Die Entpannung kann dadurch erfolgen, dass Energie zwischen einem Entpannungsfahrzeug 1 und dem zu entpannenden Fahrzeug 2 ausgetauscht wird, wobei die Energie mittels einer nicht dargestellten Koppeleinrichtung oder kontaktlos bzw. drahtlos auf das energetisch zu entpannende Fahrzeug 2 übertragbar ist. Falls der Antrieb des Entpannungsfahrzeugs leistungsmässig entsprechend ausgelegt ist, kann das zu entpannende Fahrzeug 2 mechanisch angekoppelt werden und zu einer Ladestation geführt werden oder aus dem Verkehr gezogen werden.

S9: Entpannung.

Die zur Entpannung des Fahrzeuges notwendigen Aktionen werden ausgelöst. Dies kann etwa die Anforderung eines Entpannungsfahrzeuges 1 beinhalten, welches über eine geeignete Koppeleinrichtung eine Auftankung des Speichers bewerkstelligt, so dass nachfolgend wieder eine autonome Aktivität möglich ist. Ebenso kann eine mechanische Verschiebung bis zur nächsten Auftankstelle erfolgen. Ist das Fahrzeug in einem Zustand, in welchem es über genügend Energiereserven zur weiteren Ausführung verfügt, so wird der Überwachungsprozess mit dem Schritt S1 fortgesetzt.

Fig. 2 zeigt eine Ausführungsvariante mit mechanischer Kopplung:

Ein in Pfeilrichtung P1 fahrendes Entpannungsfahrzeug 1, beispielsweise jedes Fahrzeug des Transportsystems, verfügt über mindestens einen Puffer 4, welcher eine gegenseitige Verschiebung der Fahrzeuge 1,2 ermöglicht. Dieser ist so angebracht, dass eine Krafteinleitung vom antreibenden auf das anzutreibende Fahrzeug möglich ist. Gleichzeitig kann über einen zwangsgeführten elektrischen Kontakt 5 die Verkettung 3 sicherheitsrelevanter Signale von Sicherheitskreisen 7 der beiden Fahrzeuge 1,2 erreicht werden. Die Koordination der Abläufe kann über entsprechende Signalleitungen 6 und Übertragungsprotokolle erfolgen.

**Patentansprüche**

1.	Verfahren zur Verwaltung der Energieresource eines autonomen Fahrzeuges eines mindestens ein Fahrzeug aufweisenden Transportsystems, wobei das Fahrzeug für den Transport von Personen und/oder Gütern in vertikaler und/oder horizontaler Richtung vorgesehen ist und für die Fortbewegung des Fahrzeuges ein mittels der Energieresource versorgter Antrieb vorgesehen ist, wobei die Energieresource an mindestens einer Ladestation mit Energie versorgt wird,
	**dadurch gekennzeichnet,**
	**dass** eine Energiebilanz in Abhängigkeit von Fahrzeug- und Fahrparametern bestimmt wird und
	**dass** die Ladestation zur Versorgung der Energieresource mit Energie in Abhängigkeit der Energiebilanz bestimmt wird.

2. Verfahren zur Verwaltung der Energieresource eines autonomen Fahrzeuges nach Anspruch 1, **dadurch gekennzeichnet,** **dass** die Energiebilanz nach der Formel

$$dE(t) = Es - Ep(t) + Ef(t)$$

berechnet wird, wobei
Es die noch in der Energieresource vorhandene Energie ist,
Ep(t) die für die anstehenden Fahraufträge als Funktion der Zeit t notwendige Energie ist, wobei Fahrzeug- und Fahrparametern wie beispielsweise Eigengewicht des Fahrzeuges, Fahrdistanz, Fahrtrichtung, Fahrprofil, Last, etc. eines jeden Fahrauftrages berücksichtigt werden und
Ef(t) die Energiezufuhr zur Versorgung der Energieresource mit Energie ist.

3. Verfahren zur Verwaltung der Energieresource eines autonomen Fahrzeuges nach den Ansprüchen 1 oder 2, **dadurch gekennzeichnet,** **dass** der Halt und die Versorgung der Energieresource in den Fahrplan des Fahrzeuges einbezogen wird.

4. Verfahren zur Verwaltung der Energieresource eines autonomen Fahrzeuges nach einem der vorhergehenden Ansprüche, **dadurch gekennzeichnet,** **dass** falls keine Ladestation erreichbar ist, eine Entpannung erfolgt, wobei ein Entpannungsfahrzeug (1) des Transportsystems das zu entpannende Fahrzeug (2) mit Energie versorgt oder mechanisch ankoppelt und zu einer Ladestation führt.

**Claims**

1. Method of managing the energy resource of an autonomous vehicle of a transport system comprising at least one vehicle, wherein the vehicle is provided for the transport of persons and/or goods in vertical and/or horizontal direction and a drive supplied by means of the energy resource is provided for progressive movement of the vehicle, wherein the energy resource is supplied with energy at at least one charging station, **characterised in that** an energy balance is determined in dependence on vehicle and travel parameters and that the charging station for supplying the energy resource with energy is determined in dependence on the energy balance.

2. Method of managing the energy resource of an autonomous vehicle according to claim 1, **characterised in that** the energy balance is calculated according to the formula

$$dE(t) = Es - Ep(t) + Ef(t),$$

wherein

Es is the energy still present in the energy resource,
Ep(t) is the energy necessary for travel requests, which are present, as a function of time t, wherein vehicle and travel parameters such as, for example, unladen weight of the vehicle, travel distance, travel direction, travel profile, load, etc., of each travel request are taken into consideration, and
Ef(t) is the energy feed for supply of the energy resource with energy.

3. Method of managing the energy resource of an autonomous vehicle according to claim 1 or 2, **characterised in that** the stop and the supplying of the energy resource are included in the travel plan of the vehicle.

4. Method of managing the energy resource of an autonomous vehicle according to one of the preceding claims, **characterised in that** if no charging station is reachable a release takes place, wherein a release vehicle (1) of the transport system supplies the vehicle (2), which is to be released, with energy or mechanically couples it and leads it to the charging station.

**Revendications**

1. Méthode de gestion de la source d'énergie d'un véhicule autonome d'un système de transport comprenant au moins un véhicule, étant précisé que le véhicule est destiné à transporter des personnes et/ou des produits dans le sens vertical et/ou horizontal, qu'il est prévu pour déplacer ledit véhicule un entraînement alimenté grâce à la source d'énergie, et que la source d'énergie est alimentée en énergie au niveau d'au moins une station de charge, **caractérisée en ce qu'**un bilan énergétique est défini en fonction de paramètres de véhicule et de circulation, et **en ce que** la station de charge destinée à alimenter en énergie la source d'énergie est définie en fonction du bilan énergétique.

2. Méthode de gestion de la source d'énergie d'un véhicule autonome selon la revendication 1, **caractérisée en ce que** le bilan énergétique est calculé suivant la formule

$$dE(t) = Es - Ep(t) + Ef(t),$$

Es désignant l'énergie encore présente dans la source d'énergie,
Ep(t) l'énergie nécessaire pour les ordres de trajet en attente, en fonction du temps t, étant précisé que des paramètres de véhicule et de circulation comme par exemple le poids propre du véhicule, la distance à parcourir, le sens et le profil du trajet, la charge, etc. de chaque ordre de trajet sont pris en compte, et
Ef(t) l'apport en énergie pour alimenter en énergie la source d'énergie.

3. Méthode de gestion de la source d'énergie d'un véhicule autonome selon la revendication 1 ou 2, **caractérisée en ce que** l'arrêt et l'alimentation de la source d'énergie sont intégrés dans le plan de circulation du véhicule.

4. Méthode de gestion de la source d'énergie d'un véhicule autonome selon l'une des revendications précédentes, **caractérisée en ce qu'**un dépannage a lieu au cas où aucune station de charge n'est accessible, un véhicule de dépannage (1) du système de transport alimentant en énergie le véhicule à dépanner (2) ou s'accouplant mécaniquement avec lui et l'amenant à une station de charge.

# Fig. 1

# Fig. 2

# Fig. 3

Es

0 ─────────────────────────────► t

Ep

0 ─────────────────────────────► t

Ef

Rekuperation    Auftankung

0 ─────────────────────────────► t

dE

0 ─────────────────────────────► t

**IN DER BESCHREIBUNG AUFGEFÜHRTE DOKUMENTE**

**In der Beschreibung aufgeführte Patentdokumente**

- EP 0048847 A